# EUROPEAN PATENT SPECIFICATION

(11) **EP 1 981 609 B1**
(45) Date of publication and mention of the grant of the patent: **17.09.2014**
(21) Application number: 06747924.6
(22) Date of filing: 16.06.2006
(51) Int. Cl.: B01D 46/00, B01D 46/28, B03C 3/30

(54) **AN AIR FILTER AND A METHOD FOR MANUFACTURING SUCH AN AIR FILTER**
LUFTFILTER UND VERFAHREN ZUR HERSTELLUNG SOLCH EINES LUFTFILTERS
FILTRE A AIR ET PROCEDE DE FABRICATION D'UN FILTRE A AIR DE CE TYPE

(30) Priority: 13.01.2006 SE 0600052
(43) Date of publication of application: 22.10.2008
(73) Proprietor: Zehnder Group Nordic AB, 187 13 Täby (SE)
(72) Inventor: BERGSTRÖM, Lars-Göran, S-645 42 Strängnas (SE)
(74) Representative: Berglund, Stefan
(86) International application number: PCT/SE2006/000732
(87) International publication number: WO 2007/081250

(56) References cited:
- WO-A1-01/39889
- WO-A1-02/32577
- WO-A1-95/33569
- WO-A1-98/53914
- WO-A1-98/53915
- WO-A1-02/083314
- WO-A1-03/006169
- DATABASE WPI Week 198523 Thomson Scientific, London, GB; AN 1985-139861 XP002543784 & SU 1 125 053 A1 (AS UKR PHYS ORG CHE) 23 November 1984 (1984-11-23)

## Description

### BACKGROUND OF THE INVENTION AND PRIOR ART

The present invention relates to a method for manufacturing of an air filter, which comprises a filter frame comprising a plurality of side by side mounted elongated distance elements which form passages for air, and a filter body, which comprises electrostatically chargeable fibres, which are attached to the distance elements such that the fibres obtain an extension from the filter frame to a position located at a distance from and downstream the filter frame with respect to the intended flow direction of the air through the air filter.

Air filters of the kind, which here are concerned, are mounted in passages through which air flows. Such passages may be horizontally or vertically orientated or consist of airflow channels which are comprised in a ventilation system. Consequently, such an air filter comprises a filter body with a plurality of curtains of electrostatically chargeable fibres which separate particles from the air both by means of mechanical and electrostatic action. Thereby, such an air filter may clean the air from both large and microscopically small particles.

WO95/33567 shows an air filter which consists of a filter body of flexible fibres. The flexible fibres are set in motion by passing air and are charged electrically by rubbing and friction of adjacent elements. The flexible fibres are carried, at one of its ends, by a filter frame which has a substantially round contour shape. The filter frame is formed by a flexible band to which the flexible fibres are attached together with a number of distance elements. The flexible band with the distance elements and the flexible fibres are rolled up during a manufacturing process such that a round filter frame is formed. Such a spiral filter frame consists of a successively increasing number of flexible fibres per area unit in direction towards a centre area. Thus, the flow resistance for the air will be larger in the centre area of the air filter then in more peripherally located areas. It is also difficult to automatize the manufacturing of this air filter such that it can be manufactured in a favourable production technical manner.

It is known to manufacture air filter with a filter body which consists of elongated flexible fibres which, at an end, are attached to a four-sided filter frame. Such a filter frame may be composed of a plurality of rectangular distance elements which have two elongated sidewalls in parallel which are connected by transverse partition walls. Thus, each of the elongated distance elements provides delimited cells which form inlet openings for the air flowing through the filter. In such an air filter, the elongated flexible fibres may be equally divided over the cross section of the air filter. However, air filters, which comprise a four sided frame unit, are not suitable to be mounted in round channels or passages.

WO 03/006169 A1 describes a method for producing air-cleaning filters as well as an air-cleaning filter. The document shows a filter of a round shape.

SU 1 125 053 A describes a flange with a grid of intersecting steel wires, to which strips of polymer film are attached.

WO 95/33569 A1 describes a device for separating extremely fine particles from air. The document also describes a manner of manufacturing an air filter.

WO 01/39889 A1 describes a method and a plant for the manufacture of air-cleaning filters as well as a filter manufactured in accordance with the method. The document shows filters of different shapes. A filter having a circular cross-section shape is shown.

WO 98/53914 A1 describes a filter for separating particles from air. The filters comprise separating walls. The document shows a filter tube having a circular cross-section.

WO 02/32577 A1 describes an air-cleaning filter.

### SUMMARY OF THE INVENTION

The object of the present invention is to provide a method for manufacturing of an air filter of the initially mentioned kind which is mountable in channels or openings with round cross sections, such that it can be manufactured in a favourable production technical manner.

This object is achieved by the method defined in claim 1.

The temporary air filter may consist of an air filter with a four sided filter frame and have a design as a conventional air filter. Such a temporary air filter may be manufactured in a very favourable production technical manner. Thereafter, the temporarily formed filter frame is cut such that a filter frame with a substantially circular contour shape is obtained. This manufacturing step may be performed in a relatively uncomplicated manner. Thus, the air filter, according to the invention, may be manufactured in a nearly as favourable production technical manner as a conventional air filter with a four-sided filter frame. If the filter frame is manufactured by distance elements which have substantially the same length, the temporary air filter may have a substantially square filter frame. Thus, the loss of material is reduced during the cutting process. A punching tool is used which can cut out a filter frame with a round shape in one step. In order to further reduce the loss of material, distance elements with different lengths may be used. Consequently, by using a filter frame of elongated distance elements, it is possible to provide a temporary air filter with equally divided elongated flexible fibres. Since superfluous material of the filter frame is cut away, attached flexible fibres will follow therewith and the remaining circular filter frame holds an attached filter body with equally divided flexible fibres.

The air filter may comprise a casing having an inner surface which defines an inner space and fastening elements for attaching of the filter frame inside the inner space of the casing. Preferably the casing is tubular. An air filter with a casing which encloses the filter frame and the filter body consists of a connected unit which relatively simply may be attached in an air channel. Advantageously, the inner space of the casing has an extension which at least corresponds to the total extension of the filter frame and the filter body in the flow direction of the air. Thus, the casing may enclose the filter frame and the whole filter body. Consequently, air is prevented from flowing out on the side of the filter body. Thus, all air is forced to flow along the whole length of the filter body.

The fastening elements may comprise radially inwardly projecting shoulders which are provided on the inner surface of the casing which are adapted to come in contact with a peripheral surface of the filter frame in order to define a fastening position for the filter frame inside the casing. Thus, the filter frame with attached filter body can be pushed in to an intended position inside the casing. Said fastening elements may also comprise radially inwardly projecting resilient tongues which are arranged in connection to the inner surface of the casing which are adapted to grip and retain the filter frame inside the casing when it has been moved to said fastening position inside the casing. When the filter frame reaches the intended fastening position, said tongues are flexed inwardly and grip a surface of the filter frame. Thus, a snap-in connection is provided which retains the filter frame in an intended fastening position inside the casing in a simple but functional manner. By means of such a snap-in connection, it is also possible to release the filter frame and the filter body from the casing for possible exchange without that the casing needed to be demounted. Alternatively, said fastening elements may comprise a glue which is adapted to attach a peripheral surface of the filter frame against an inner surface of the tubular casing. With a suitable glue, which is applied around the whole round filter frame, a safe attachment of the filter frame inside the casing is obtained. According to a further alternative, said fastening element may comprise a weld joint which is adapted to attach a peripheral surface of the filter frame against an inner surface of the casing. In the cases that the filter frame and the casing are formed by material which can be welded together, this is an alternative way of attaching the filter frame inside the casing.

The electrostatically chargeable fibres may be attached to the distant elements by means of a weld joint. Advantageously, since the chargeable fibres of the filter body as well as the filter frame are manufactured of plastic material, it is easy to supply a pressure and heat to the fibres such they attach to the filter frame. Alternatively, the fibres may be attached by glue on the filter frame. Advantageously, the fibres of the filter body has a substantially uniform length. Thus, a uniform filtering of the air, which flows through different cross-sections of the filter body is provided. Advantageously, said elongated distance elements comprise two longitudinal wall elements arranged in parallel which are provided at a distance from each other by means of transverse wall elements. Thereby, each of the distance elements comprises an inlet opening for air.

### BRIEF DESCRIPTION OF THE DRAWINGS

In the following, a preferred embodiment of the invention is described as an example with reference to the attached drawings, in which:

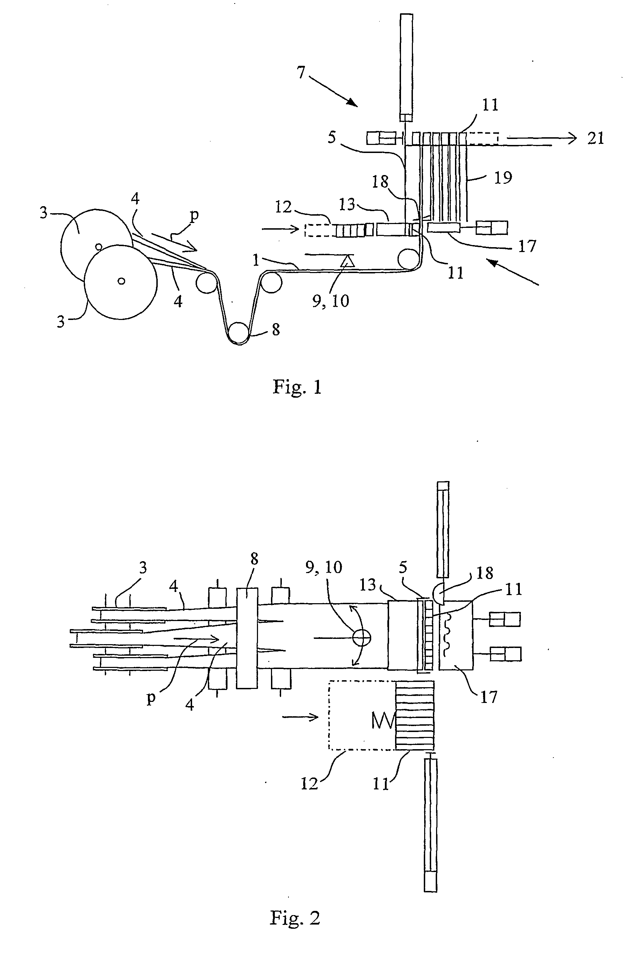

Fig 1 shows a side projection of a production line for manufacturing according to the invention of an air filter,
Fig 2 shows a horizontal projection of the arrangement in Fig 1 with a packing station included in Fig 1 removed for the sake of clarity,
Fig 3 shows a side projection of a punching step included in the production line,
Fig 4 shows a horizontal projection of the arrangement in Fig 3 with a punch included in Fig 3 removed for the sake of clarity,
Fig 5 shows a broken out end portion of a distance element included in an air filter with attached fibre curtain,
Fig 6 shows a broken out cross-section of an air filter at punching,
Fig 7 shows a broken out cross-section through an air filter with surrounding tubular casing,
Fig 8 shows a round filter frame with attached filter body in a perspective view,
Fig 9 shows a casing adapted for fitting of the round frame in Fig 8, likewise in perspective, and
Fig 10 shows a perspective view of casing with filter frame fitted therein.

### DETAILED DESCRIPTION OF A PREFERRED EMBODIMENT OF THE INVENTION

In the following description of the invention these are denominations which meaning, in this connection, are explained below:
With "round" cross-section is meant at first hand a circular round cross-section, which is not to be understood as excluding cross-sections which differ from the perfect circle since the invention also can be used for manufacturing of filter with, for example, oval and elliptic cross-sections, or for manufacturing of polygonal filters with rounded corners.
With "filter frame" is meant a fixed grouping of the inlet openings of the filter in a number of sub-openings, which can be defined by longitudinal and transverse partitation walls. With "filter body" is meant a member comprising fibres and/or fibre tows, the main extension of which is in a flow direction, and which preferably are substantially equally divided over the cross-section area of the filter.
With "fibre tow" is meant a bundle of thin fibres which are loosely plated together to a splitable tow.
With "fibre" is meant the individual smallest part included in a fibre tow.

One suitable fibre for the filter is a synthetic fibre of micron thickness, for example, a polymer fibre or a co-polymer fibre. However, different kinds of fibres can be included in the fibre tows, preferably of one or several synthetic materials, even if the method presented here for manufacturing of an air filter does not necessarily have to be applied in connection with a synthetic fibre material but even so can be practised with the use of only natural fibres or with a mix of synthetic fibres and natural fibres.

The filter body may consist of a large number of synthetic fibre tows and synthetic fibres of micron thickness, of substantially uniform extension and length, which randomly laterally connected in an irregular net- and labyrinth-like structure form a large number of flow channels which are maintained by static electric charging of fibres and fibre tows. The filter body may be regarded as a hybrid in which both the mechanical and the electrostatical acting properties of the filter are connected.

Without excluding, for that reason, other kinds of fibres or manufacturing processes, one for the object suitable and in the specialized trading commercially available fibre can be mentioned, as an example, a fibre produced by melt blowing, a method which can be defined as a process in which air with a high velocity blows a floating thermoplastic resin from a nozzle during forming of a fine, fibrous and splitably connected fabric or fibre tow. Fibres with a diameter in micron size, typically between 2-4 µm, but also down to diameters less than 2 µm or up to a diameter of 4-10 or 10-15 µm can be manufactured by this method. Such fibre fabrics or fibre tows can also enclose bi- or multiple component fibres of different polymer materials, for example polypropen, polyethen, polystyrene, polycarbonate, Nylon. These fibres, which can be statically electrically charged in advanced and thus be supplied in a charged state, have excellent ability to take up and maintain an electric charge for attracting and bind to its surface particles which are transported in the air. Among manufactures of fibres of micron size, which are suitable for air-cleaning treatments, can be mentioned 3M, Eastman Kodak, Kimbery-Clark, Hollingsworth and Vose.

The denomination "micron thickness" such as it is used in this description is to be understood to include at least the above mentioned fibre diameters. In the drawings, fibres, and fibre tows are only schematically disclosed for drawing technical reasons, since neither draw technique or reproduction technique have the ability to reproduce the real number and size of actual fibres.

A production line arranged to realize the elementary production steps during manufacturing according to the invention of a filter is shown schematically in the drawing figures. A driving member has symbolically been indicated therein as a piston/cylinder unit, since it is within reach for a person skilled in the art to optionally use pneumatics, hydraulics or electricity for driving moveable members and transports in the production line.

Consequently, a fibre path 1 is fed in the feeding direction P from a store 2 of fibres, comprising one or several store rollers 3 from which fibre tows 4 are successively unwound in repeated steps the length of which is determined by the axial length of the final filter body. The feeding is intermittently driven by a moveable grip member 5 which is controlled and driven for a to and fro motion between a welding station 6 and a packaging station 7 in manners which are explained more closely below. During the feeding, the fibre tows are guided over pulley wheels 8 at least one of which is stationary and unturnable, and acting to generate or add an electric voltage to the fibres in the fibre path by means of friction and rubbing.

During the feeding, an extension of the original fibre tow/fibre tows are performed in lateral direction, i.e., across the feeding direction P of the fibre path, such that the fibres are formed to a mainly plane fibre path upstream the grip member seen in the feeding direction. The extension of the fibre path is partly produced by its extension over the guide pulleys 8 and partly by the action of a blow member 9 by which compressed air is directed torwards the fibre path by a nozzle 10 controlled and driven for a swinging or a to and fro motion a cross the feeding direction of the fibre path. By the influence of the compressed air a splitting of the fibre tows is accomplished, which are divided in multifibre tows and individual fibres of substantially uniform extension, and which randomly are laterally connected in an irregular net- and labyrinth-like structure comprising a large number of cavities and channels, which are maintained by static electric charging of fibres and fibre tows. By the influence of jet of the compressed air, the fibre path is supplied further electric charging as a result of friction and by mutual rubbing between fibres and fibre tows during the splitting.

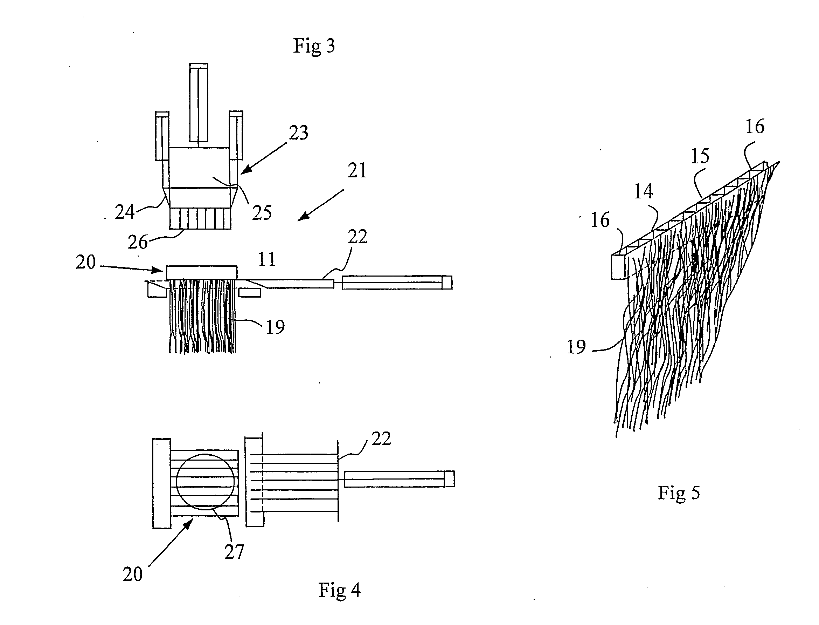

The gripping member 5 is, in the welding station 6, arranged to receive a distance element 11, which is fed piece by piece between the fibre path and a holder-on 13 associated with the welding station 6 from a store 12 provided at the side of the fibre path. The distance element 11, see especially fig. 5, is formed by heat weldable material such as plastic, has elongated shape with a length corresponding to or exceeding the width of the fibre path, and comprising two in parallel running long sides 14 and 15 which are mutually connected by means of transverse walls 16. The walls 16 are suitably, however not necessarily, evenly divided in the length of the distance element and perpendicularly connected to both the long sides. The long sides and the walls of the distance elements delimit individual flow inlets to the filter body in a four sided filter frame formed by packing of distance elements side by side such as explained more closely below. Typically, the distance element 11 can have a length of about 200 mm, a height in the flow direction of about 10 mm, a width of about 5 mm, with a wall thickness below or near the millimeter. The here mentioned measures are naturally only devoted to give the reader an understanding of the proportions of the distance elements, and will be adapted to the actual application by the person skilled in the art.

Further, the welding station 6 is associated with a clamping jaw 17, which is driven and controlled for motion in direction to respectively from the holder-on 13, and more exactly with a force jamming the fibre path to contact with one long side of the distance element whereas its other long side is supported by the holder-on 13. In the jamming position, the clamping jaw is brought to swing with high frequency, within the ultrasonic frequency range. Such swinging can suitably, such as known by the person skilled in the art, be produced by means of piezo electric elements. The kinetic energy of the clamping jaw is transformed by the distance element and the fibre path to heat and results in a fusing or welding together of the fibre path and the distance elements.

Alternatively, the fibres may certainly be attached to the distance element by other forms of heat welding, melting or gluing without abandoning the concept of the invention.

Furthermore, the welding station 6 is provided with a knife 18. The knife 18 may be performed as a rotating or fixed edge, which is movable across the fibre path and along the distance element for cutting of the fibre path at the level of the upper surface of the distance element.

The gripping member 5 is driven for lifting the distance element 11 with attached fibre path to the packing station 7, and unwinds further material from the storing rollers during this motion. The gripping member 5 can for this purpose comprise fixed or movable members such as fingers or shoulders arranged to grip under the distance element or be controllable for engagement with the ends of the distance elements. After the distance element has been delivered in the packing station, the gripping member returns to the welding position for receiving the next distance element, which after welding and cutting of the fibre path is lifted to the packing station. By the cutting of the fibre path, a limited fibre curtain 19 is formed hanging from the distance element 11 delivered in the preceding working operation. The length of this fibre curtain is determined by the lifting height of the gripping member between the welding station and the packing station. After delivering of the later distance element, the previous one is displaced away from the delivering position, suitably during the displacement on a frame supporting the distance element, whereby a filter frame of packed distance elements is formed successively in the packing station.

In the above described manner, a filter frame 20 is formed with a four sided contour with inlet openings defined by the distance elements 11 for an air flow, from which filter frame a assempled filter body extends in the flow direction through the assembled curtains 19. The distance elements included in the four sided filter frame can in suitable manner be fixed mutually for facilitating the handling of future working steps. Such stabilizing of the filter frame can comprise fixing of the ends of the distance elements in the sides of filter frames, such as by means of edge bands which are glued or heat welded against the edges of the filter frame. Alternatively, the sides of the distance element can have formations, such as in each other gripping formations, wherein the distance elements are connected mutually at the packing.

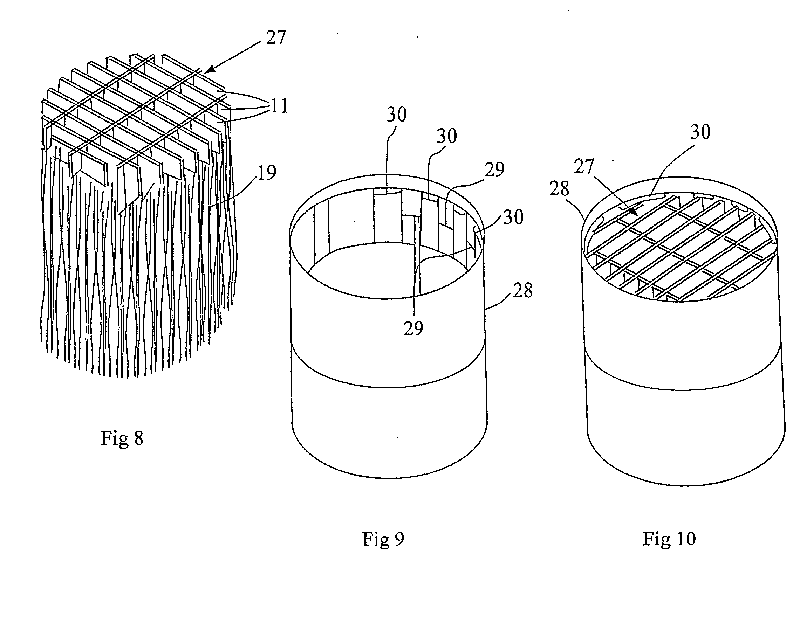

A round filter frame with attached filter body (se fig. 8) consisting of electrically chargeable fibres and fibre tows can in a successive working operation be formed from this four sided filter frame. A preferable solution is shown according to the following for the special problems associated with this productions step.

For this purpose, the four sided filter frame 20 is transferred to a punching station 21, see fig. 3-4, wherein the filter frame is delivered with the fibre curtains hanging from the distance elements. The punching station 21 is associated with a movably arranged holder-on 22 which is driven, during the insertion of the filter frame through the down hanging fibre curtains, to support the filter frame during the punching operation, as well as a punch 23 which is provided with an annular and preferably circular edge 24 punching out a round filter frame from the four sided by a motion directed against the upper side of the filter frame.

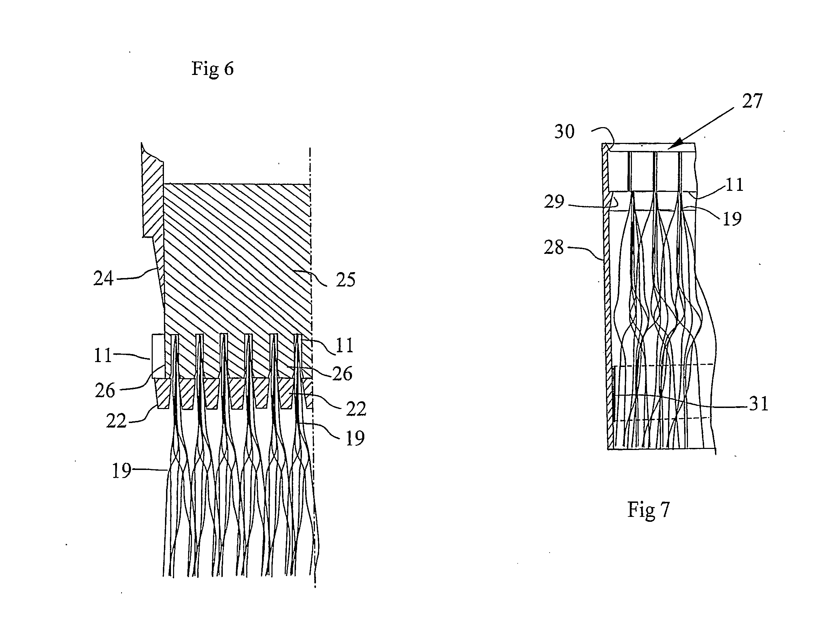

The holder-on 22, se also fig. 6, can be formed as a grate with parallel arms, to the number corresponding to the number of distance elements included in the filter frame. These arms are connected at one of their ends and are with their free ends from the side of the filter frame interjectable under the distance elements in the length direction of these for being received in the spaces which here are formed between the curtains of fibre/fibre tows hanging from the distance elements. However, the holder-on can alternatively also be provided to be arranged across the length direction of the distance elements through the fibre curtains. In such an embodiment, the number of arms can be significantly fewer and comprise a pyramid-shaped cross section (not shown) for smallest possible influence of the fibres. In both the cases, the holder-on can suitably be provided with fixed supports for the undersides of the arms on opposite sides of the filter frame.

Preferably, punching is performed in occurring cases during simultaneous propping of the distance elements included in the future round filter frame against deformation and lateral motions. For this purpose, the punch 23 is configured with a first round part forming a core 25, which in a first step is driven for engagement in the inlet openings of the filter frame, whereafter an annular second part, which is movable in relation to and enclosing the first part and forms the edge 24, is driven in a second step for punching.

Preferably, the first part 25 is formed with a number of projections 26 on its underside, which are insertable with fitting in the inlet openings of the filter frame. The projections 26, see fig. 5-6, are formed for substantially entirely filling the inlet openings in an inserted position but do not necessarily need to be provided in a sufficient number for filling all inlet openings of the filter frame. A sufficient fixing against lateral motions is considered to be reached if all distance elements included in the future round filter frame are gripped by at least one of the projections 26. In order to guarantee that the punching can be performed without deformation caused by shearing in the sides of the distance elements and the partitation walls, it is however preferred, especially if these sides and partitation walls are configured in thin thickness of material and by flexible material, that the projections 26 are formed for filling all inlet openings including the openings which are divided by the edge and are open against the peripheral of the round filter frame. Advantageously, the projections 26 may have the form of fingers with chamfered end edges, such as illustrated in fig. 6.

Consequently, the formed round filter frames 27 are thereafter lifted out from the four sided original filter frame and delivered from the punch to an annular casing 28. The included distance elements, connected by engagement of the projections 26, are thereby inserted into the casing 28 which successively occupies the location of the surrounding edge around the peripheral of the round filter frame. The round filter frame 27 and its reception in the casing 28 are shown with reference to the drawing figures 7-10.

The casing 28 extends in a flow direction between an inlet end and an outlet end, in a length at least corresponding to the height of the distance elements and preferably corresponding the length of the filter frame with attached fibre curtains, such that the round filter body in its entirely is enclosed by the casing. Advantageously, the casing 28 may be formed by synthetic material and moulded in one connected tubular piece, which at its inlet end is arranged to enclose the peripheral of the round filter frame for connection of the round filter frame 27.

In a following step, the peripheral of the round filter frame is attached internally in the casing 28. For this purpose, the casing can, on its inside and at a suitable distance from the inlet end, be formed with radially interjected shoulders 29 against which the underside of the filter frame are brought to rest in the inserted position. Closer to the inlet end, and at a distance from the shoulders 29 corresponding to the height of the distance elements, radially inwardly projecting lips 30 are provided on the inside of the casing and active for gripping around the upper side of the filter frame when it has been received between the shoulders and lips for fixing by a snap-in connection. In occurring cases, the fixing of the filter frame can comprise a turning for engagement with locking formations in the inside of the casing, and can also alternatively include gluing or welding, in the latter cases presupposing that the casing is manufactured of a heat weldable material.

Finally, the punch is loosened from the filter frame by drawing the projections 26 out of the inlet openings, which may be done while the distance elements of the filter frame now is fixed in the casing. Alternatively, (not shown) the first part 24 of the punch is arranged, with one or several pushers moveable relatively the projections, which between the projections can be driven out to abutment against the upper edges of the distance elements for pressing the filter frame out of engagement with the projections.

In the above described manner, an air filter is provided, which is characterized by a round filter body with assembled curtains 19 of electrically chargeable fibres of substantially unitary length, which curtains each are carried by a separate distance element 11, which distance elements are commonly punched to a filter frame 27 with round shape from a four sided filter frame 20 of separate distance elements packed together which in a brought together state define the inlet openings for an air flow directed against the filter.

The filter body can, according to the above, be enclosed in a surrounding, channel shaped casing, wherein the peripherally located fibres and fibre tows of the filter body are attached to the inside of the casing to guarantee mechanically as well as electrically that the filter body fills the cross-section area of the casing, also when the filter is applied in a horizontally orientated air flow. Said attachment is indicated in Fig 7 with the reference 31 and can be realised by means of a suitable glue and a double-faced tape. The inner surface of the casing can, for example, be provided with one or several glue strings on suitable places inside the filter frame with attached filter body mounted inside the casing. Alternatively, the fibres may be attached against the internal surface of the tubular element 28 by means of a weld joint. The fibres in said peripheral portion of the filter body are attached against the tubular element in a position 31 which is located more closely to the downstream located position of the fibres than the fastening position of the fibres in the filter frame 20 such that the filter body also at its lower end is prevented to collapse.

The invention is not in any way restricted to the embodiment described on the drawing but may be varied freely within the frames of the claims.

## Claims

1. A method for manufacturing of an air filter, wherein the method comprises the step of attaching electrically chargeable fibres (19) to elongated distance elements (11), **characterized by** the steps of mounting several elongated distance elements (11), each comprising two longitudinal wall elements (14, 15) arranged in parallel at a distance from each other by means of transverse wall elements (16), with attached fibres side by side such that said distance elements (11) in a mounted state form a temporarily formed filter frame with attached fibres and cutting out a filter frame (20) which has a substantially round contour shape with attached fibres (19) from the temporarily formed filter frame, wherein the step of cutting out said substantially round filter frame (20) from the temporary filter frame is done by means of a punching tool (23).

2. A method according to claim 1, **characterized by** the step of attaching the substantially round filter frame (20) with attached fibres inside a casing (28) having an inner surface with a size and shape substantially corresponding to the contour shape of the filter frame (20).

3. A method according to claim 2, **characterized by** the step of forming an inner surface of the casing (28) with radially inwardly projecting shoulders (29) and pushing in the filter frame (20) to a fastening position inside the tubular casing (28) which is defined by said shoulders (29).

4. A method according to claim 3, **characterized by** the step of forming an inner surface of the tubular casing (28) with radially inwardly projecting resilient tongues (30) which are adapted to grip and maintain the filter frame (20) inside the tubular casing (28) when it has been moved to said fastening position inside the tubular casing (28).

5. A method according to claim 2, **characterized by** the step of attaching a peripheral surface of the filter frame (20) against an inner surface of the tubular casing (28) by means of a glue.

6. A method according to claim 2, **characterized by** the step of attaching a peripheral surface of the filter frame (20) against an inner surface of the tubular casing (28) by means of a weld joint.

7. A method according to any one of the preceding claims 2-6, **characterized by** the step of attaching the filter frame (20) in an inner space of the casing (28) which has an extension which at least corresponds to the total extension of the filter frame (20) and the filter body (19) in the flow direction of the air.

8. A method according to any one of the preceding claims 1-7, **characterized by** attaching said chargeable fibres (19) on the distance elements by means of a weld joint.

9. A method according to any one of the preceding claims 1-8, **characterized by** the step of forming the fibres (19) of the filter body with a substantially uniform length.

## Patentansprüche

1. Verfahren zur Herstellung eines Luftfilters, wobei das Verfahren den Schritt des Befestigens von elektrisch aufladbaren Fasern (19) an langgestreckten Abstandselementen (11) umfasst, **gekennzeichnet durch** die Schritte des Montierens von mehreren langgestreckten Abstandselementen (11), die jeweils zwei längs verlaufende Wandelemente (14, 15) umfassen, die parallel zueinander und **durch** quer verlaufende Wandelelemente (16) voneinander beabstandet angeordnet sind, wobei die Fasern nebeneinander derart befestigt sind, dass die Abstandselemente (11) in einem montierten Zustand einen vorübergehend gebildeten Filterrahmen mit befestigten Fasern bilden, und Ausschneidens eines Filterrahmens (20) mit einer im Wesentlichen runden Umfangsform mit den daran befestigten Fasern (19) aus dem vorübergehend gebildeten Filterrahmen, wobei der Schritt des Ausschneidens des im Wesentlichen runden Filterrahmens (20) aus dem vorübergehenden Filterrahmen **durch** ein Stanzwerkzeug (23) erfolgt.

2. Verfahren nach Anspruch 1, **gekennzeichnet durch** den Schritt des Befestigens des im Wesentlichen runden Filterrahmens (20) mit den daran befestigten Fasern in einem Gehäuse (28), das eine Innenfläche aufweist, deren Größe und Form im Wesentlichen der Umfangsform des Filterrahmens (20) entsprechen.

3. Verfahren nach Anspruch 2, **gekennzeichnet durch** den Schritt des Bildens einer Innenfläche des Gehäuses (28) mit radial nach innen vorspringenden Schultern (29) und des Hineindrückens des Filterrahmens (20) in eine in dem rohrförmigen Gehäuse (28) vorgesehene Befestigungsposition, die **durch** die Schultern (29) definiert wird.

4. Verfahren nach Anspruch 3, **gekennzeichnet durch** den Schritt des Bildens einer Innenfläche des Gehäuses (28) mit radial nach innen vorspringenden federnden Zungen (30), die geeignet sind, den Filterahmen (20) zu ergreifen und in dem rohrförmigen Gehäuse (28) zu halten, wenn dieser in die Befestigungsposition in dem rohrförmigen Gehäuse (28) gebracht wurde.

5. Verfahren nach Anspruch 2, **gekennzeichnet durch** den Schritt des Befestigens einer Umfangsfläche des Filterrahmens (20) an einer Innenfläche des rohrförmigen Gehäuses (28) mittels eines Klebers.

6. Verfahren nach Anspruch 2, **gekennzeichnet durch** den Schritt des Befestigens einer Umfangsfläche des Filterrahmens (20) an einer Innenfläche des rohrförmigen Gehäuses (28) mittels einer Schweißverbindung.

7. Verfahren nach einem der Ansprüche 2 bis 6, **gekennzeichnet durch** den Schritt des Befestigens des Filterrahmens (20) in einem Innenraum des Gehäuses (28), der eine Ausdehnung aufweist, die mindestens der Gesamtausdehnung des Filterrahmens (20) und des Filterkörpers (19) in der Strömungsrichtung der Luft entspricht.

8. Verfahren nach einem der Ansprüche 1 bis 7, **gekennzeichnet durch** das Befestigen der aufladbaren Fasern (19) an den Abstandselementen **durch** eine Schweißverbindung.

9. Verfahren nach einem der Ansprüche 1 bis 8, **gekennzeichnet durch** den Schritt des Bildens der Fasern (19) des Filterkörpers mit im Wesentlichen gleichmäßiger Länge.

## Revendications

1. Procédé de fabrication d'un filtre à air, dans lequel le procédé comprend les étapes d'attachement de fibres chargeables électriquement (19) à des éléments d'écartement allongés (11), **caractérisé par** les étapes de :
montage de plusieurs éléments d'écartement allongés (11), comprenant chacun deux éléments de paroi longitudinaux (14, 15) disposés en parallèle, écartés l'un de l'autre au moyen d'éléments de paroi transversale (16), avec des fibres attachées côte à côte de sorte que lesdits éléments d'écartement (11) en état monté forment un cadre de filtre temporairement formé avec des fibres attachées, et
découpe d'un cadre de filtre (20) qui a une forme de contour sensiblement ronde avec des fibres attachées (19) depuis le cadre de filtre temporairement formé, dans lequel l'étape de coupe dudit cadre de filtre (20) sensiblement rond depuis le cadre de filtre temporaire est effectuée au moyen d'un outil de découpage (23).

2. Procédé selon la revendication 1, **caractérisé par** l'étape d'attachement du cadre de filtre (20) sensiblement rond avec des fibres attachées à l'intérieur d'une enveloppe (28) possédant une surface intérieure avec une taille et une forme correspondant sensiblement à la forme de contour du cadre de filtre (20).

3. Procédé selon la revendication 2, **caractérisé par** l'étape de formation d'une surface intérieure de l'enveloppe tubulaire (28) avec des épaulements (29) faisant saillie radialement vers l'intérieur et poussant le cadre de filtre (20) vers une position de fixation à l'intérieur de l'enveloppe tubulaire (28) qui est définie par lesdits épaulements (29).

4. Procédé selon la revendication 3, **caractérisé par** l'étape de formation d'une surface intérieure de l'enveloppe tubulaire (28) avec des languettes élastiques (30) faisant saillie radialement vers l'intérieur qui sont adaptées pour saisir et maintenir le cadre de filtre (20) à l'intérieur de l'enveloppe tubulaire (28) lorsqu'il a été déplacé vers ladite position de fixation à l'intérieur de l'enveloppe tubulaire (28).

5. Procédé selon la revendication 2, **caractérisé par** l'étape d'attachement d'une surface périphérique du cadre de filtre (20) contre une surface intérieure de l'enveloppe tubulaire (28) au moyen d'une colle.

6. Procédé selon la revendication 2, **caractérisé par** l'étape d'attachemeut d'une surface périphérique du cadre de filtre (20) contre une surface intérieure de l'enveloppe tubulaire (28) au moyen d'un joint soudé.

7. Procédé selon l'une quelconque des revendications précédentes 2 à 6, **caractérisé par** l'étape d'attachement du cadre de filtre (20) dans un espace intérieur de l'enveloppe (28) qui a une prolongation qui correspond au moins à la prolongation totale du cadre de filtre (20) et le corps de filtre (19) dans la direction d'écoulement de l'air.

8. Procédé selon l'une quelconque des revendications précédentes 1 à 7, **caractérisé par** l'attachement desdites fibres rechargeables (19) au moyen d'un joint soudé.

9. Procédé selon l'une quelconque des revendications précédentes 1 à 8, **caractérisé par** l'étape de formation des fibres (19) du corps de filtre avec une longueur sensiblement uniforme.
